# EUROPEAN PATENT SPECIFICATION

(11) **EP 0 653 950 B1**
(45) Date of publication and mention of the grant of the patent: **13.11.1996**
(21) Application number: 93917697.0
(22) Date of filing: 29.07.1993
(51) Int. Cl.: B01D 15/00, C02F 1/28

(54) **MATERIAL FOR EXTRACTING HYDROPHOBIC COMPONENTS DISSOLVED IN WATER**
MATERIEL ZUM EXTRAHIEREN VON IN WASSER GELÖSTEN HYDROPHOBEN SUBSTANZEN
MATERIAU DESTINE A ETRE UTILISE POUR L'EXTRACTION DE COMPOSANTS HYDROPHOBES DISSOUS DANS L'EAU

(30) Priority: 07.08.1992 NL 9201418
(43) Date of publication of application: 24.05.1995
(73) Proprietor: Akzo Nobel N.V., 6824 BM Arnhem (NL)
(72) Inventor: BUIJTENHUIJS, Frederik, Albert, NL-6835 HM Arnhem (NL); PRAGT, Johanne, Josef, NL-6951 MG Dieren (NL); SCHOMAKER, Elwin, NL-68882 NX Velp (NL)
(74) Representative: Schalkwijk, Pieter Cornelis
(86) International application number: EP9302029
(87) International publication number: WO9403249

(56) References cited:
- EP-A- 0 044 405
- EP-A- 0 106 970
- EP-A- 0 248 429
- DE-A- 3 632 360
- FR-A- 2 251 525
- GB-A- 2 115 425
- NL-A- 7 701 328
- US-A- 4 276 179

## Description

The invention relates to the use of a porous, preferably dimensionally stable, polymer for the extraction of hydrophobic constituents, such as benzene, toluene, xylene and/or chlorinated hydrocarbons, from an aqueous solution, wherein the polymer contains a hydrophobic liquid exhibiting great affinity for the constituents to be extracted from the water and has a surface which will be wetted more readily by the hydrophobic liquid immobilised in pores having an average diameter of 0,1 µm or more than by the aqueous solution.
Such a use, with a porous polymer being employed, was earlier described in US-A-4 276 179. The porous polymer used therein is obtained from olefinic materials such as polyethylene and polypropylene and possesses a rate of adsorption which is believed to be a function of the surface area which can vary from about 10 to about 40 m²/g. Said surface area is achieved by providing the adsorbent with micropores having an average pore size of about 0.01 to 2 µm (100 to about 20 000 angstroms). The porous polymer is prepared from microporous films prepared by the "dry stretch" or "solvent stretch" techniques.

A major drawback of said polyolefinic films is that they cannot be regenerated by stripping with steam as they will drastically lose their adsorption efficiency, as only a few hours of heating at about 100°C will suffice to obtain a surface area which is far below the lower limit of 10 m²/g.

In GB-A-1 535 481 a porous material is employed consisting of mineral carriers which are inert with respect to water, to the hydrophobic substance to be used as extractant, and to the compound to be extracted. Examples of suitable mineral carriers mentioned are pumice, kieselguhr, bauxite, alumina, carbon, or silicates. The particles preferably have a size in the range of 0,1 mm to 5 cm. It is stated that the pore size is critical only to the extent that it should be large enough to permit penetration of the compound to be extracted, of the extraction solvent, and of the regeneration liquid.

In actual practice, using the known materials for the aforementioned extraction process is attended with major drawbacks because the hydrophobic substances absorbed in them are easily displaced by water, especially when a packed bed is employed. In consequence, the water to be extracted or purified is in fact contaminated rather than decontaminated by these substances.

The invention now provides for the use of a porous polymer with a hydrophobic liquid contained therein which may be regenerated and, a significant increase in the capacity per volume unit notwithstanding, does not give rise to stability problems, not even when utilised on an industrial scale.

The invention consists in that for the porous polymer of the known type mentioned in the opening paragraph use is made of a regenerative granulate or powder of a porous polymer having an average particle diameter in the range of 0,1 to 10 mm and pores in the range of 0,1 to 50 µm, which is obtained by the dissolving of a polymer, with heating, at a temperature above the upper critical decomposition temperature Tc in the hydrophobic liquid, followed by lowering of the temperature, resulting in a porous polymer filled with the hydrophobic substance, and the mechanical diminution of the solidified mass.

To determine the average pore diameter advantageous use is made of mercury porosimetry in accordance with ASTM D 4248-83.

It is to be considered extremely surprising that by the use of a porous polymer having a hydrophobic surface as well as an average pore diameter within the given range both the stability and the extraction capacity are so enhanced that now, for the first time, application on an industrial scale has become feasible.

It was found that, in general, optimum results can be obtained when using a polymer having an average pore diameter in the range of 0,2 to 15 µm.

The immobilised material is a liquid having the greatest possible affinity for the hydrophobic constituents to be extracted. Needless to say, this liquid should be virtually insoluble in the aqueous solution to be extracted and be so immobilised in the porous material that it cannot flow from the porous structure.
Within the framework of the invention preference is given to the use of a liquid in the form of a glycerol ester of one or more, preferably unsaturated, fatty acids.
In general, favourable results are attained if the immobilised liquid is an oil, such as palmitic oil, olive oil, peanut oil, paraffinic oil, fish oil such as herring oil, linseed oil, and, in particular, soybean oil and/or castor oil.

Generally, favourable results are attained when using a polymer of which at least 15 vol.% of the pores is filled with the substance immobilised therein, with optimum results being obtained using a polymer of which at least 50 vol.% and not more than 95 vol.% of the pores is filled with the substance immobilised therein. Completely filled up pores may cause problems on account of expansion (liquid), which may lead to the dimensions of the porous polymer being interfered with or to the immobilised liquid bursting the pores. In the case of porous materials wholly filled up with a liquid hydrophobic substance being used, these difficulties can easily be overcome by mixing the filled material with unfilled (porous) material, so that the generated excess can be absorbed during extraction. Alternatively, when a packed bed is used, the unfilled (porous) material may be deposited at the two ends of the bed as separate boundary layers. When these types of steps are taken, 100 vol.%-filled materials may also be employed.

The porous polymer is obtained by a process disclosed in US Patent Specification 4 247 498.

Examples of polymers deemed more or less suitable for use in the present invention include:
low pressure polyethylene, high pressure polyethylene, polypropylene, polystyrene, acrylonitrile-butadiene-styrene terpolymers, styrene-acrylonitrile copolymers, styrene-butadiene copolymers, poly(4-methyl-pentene-1), and polybutene.

Optimum results were attained by employing polyolefin based polymers, with preference being given to the use of a polypropylene based porous material.

The porous polymer is in the form of a granulate or a powder having an average particle diameter of 0,1 to 10 mm and may be used in a packed bed, a fluidised bed, or a tank with stirring.

Particularly when a glycerol ester of one or more unsaturated fatty acids is employed to extract aromatic compounds from aqueous solutions, preference is given to a porous material obtained by a process such as described in DE-A-32 05 289. By this process a structure may be obtained which has pores of an average diameter in the range of 0,1 to 50 µm. Especially favourable results may be obtained when using polypropylene as porous material and soybean oil/castor oil as hydrophobic substance.
Needless to say, the materials according to the invention are not just suitable for extracting aromatic waste matter from aqueous solutions; extracting useful constituents such as biologically active constituents from usually highly dilute aqueous solutions is also within the bounds of possibility.

Generally, the procedure used to prepare the extracting material according to the invention is as follows: first, 5-90 wt.% of a polymer is dissolved, with heating, at a temperature above the upper critical decomposition temperature Tc in 10-95 wt.% of a mixture of two liquid and miscible compounds A and B, the mixing ratio of A to B being so selected as to give decomposition on cooling, resulting in a polymer-rich and a polymer-poor phase. On further lowering of the temperature this decomposition structure is then fixed prior to the completion of the phase separation, due to vitrification or crystallisation of the polymer, resulting in a porous polymer material filled with the mixture of compounds A and B which is pre-eminently suited to be used within the framework of the invention, either as such or after diminution.

The invention will be illustrated with reference to the following examples, which, of course, are not to be construed as limiting in any manner the scope of the invention.

### Example I

A glass column of 2 m in length and with a diameter of 23 cm, which at its top and bottom was closed up with perforated screens having apertures of 1 mm in diameter, was filled over a length of 180 cm with a porous polypropylene powder filled with oil (hydrophobic extractant).
Two experiments were carried out, the first one making use of polypropylene powder partially filled with soybean oil, the second one employing polypropylene powder wholly filled with soybean/castor oil. The two powders also differed from each other in terms of particle size distribution.

The powders in question had the following specifications:

| | Powder I | Powder II |
|---|---|---|
| particle diameter | 350 - 1000 µm | 100 - 2000 µm |
| porosity | 3 ml/g | 3 ml/g |
| average pore diameter | 10 µm | 10 µm |
| degree of substitution | 60 wt.% | 72 wt.% |
| with oil | | |

In order to prevent the fine polypropylene powder from clogging up the apertures of the perforated screens, in each of the two arrangements the powder was bounded on either side by a 10 cm thick layer of the same material in the form of unfilled granules of 3-4 mm in diameter.

Powder I (7,38 kg) was filled with 11,06 kg of soybean oil to give a total of 18,44 kg.

Powder II (8,04 kg) was filled with 20,51 kg of soybean oil/castor oil to give a total of 28,55 kg.
The rate of flow of the liquid was 157 l per hour at a temperature of 24°C. The average overall aromatics content in the water to be purified was 840 ppm, the benzene content was 630 ppm, the toluene content 60 ppm.

In the case of powder I, the aromatics concentration in the effluent during an extraction process lasting well over 12 hours could not be measured. By then, the material had absorbed about 6,5 wt.% of benzene and 8,5 wt.% of aromatics, respectively.

In the case of powder II, the aromatics concentration in the effluent during an extraction process lasting well over 20 hours could not be measured. By then, the material had absorbed about 7 wt.% of benzene and 9 wt.% of aromatics, respectively. The point of saturation was reached after about 45 hours, when more than 15 wt.% of aromatics had been absorbed.

The aromatics content was measured intermittently by IR spectroscopy in accordance with ASTM D3921-85, the benzene content by liquid chromatography.

### Example II

The column of Example I was now filled with 28,3 kg of powder II, which was bounded on either side by a 5-10 cm thick layer of unfilled polypropylene granules. The rate of flow of the liquid was 300 l per hour at a temperature in the range of 11° to 13°C. The water to be treated had the following influent concentrations:

| | |
|---|---|
| chloroform | 0,5 ppm |
| carbon tetrachloride | 32 ppm |

After 4 hours in the loaded state, with the contaminated water flowing upwards from the bottom, the column was regenerated with 103°C steam for 4 hours, with the steam being passed through the column in opposite direction to the water. The rate of flow of the steam was 4 kg per hour. The subsequent periods of loading also were 4 hours each. After eleven of such loadings the efficiency of the column continued unchanged. The effluent concentrations of the treated water were measured by means of gas chromatography using an electron capture detector (ECD) and found to be below the detection limit for chloroform and carbon tetrachloride of < 10 ppb (parts per billion), except that in the case of carbon tetrachloride values < 60 ppb were measured occasionally.
After condensation of the steam, the chloroform and carbon tetrachloride were drawn off from a liquid separator as lower layer.

### Example III

In a manner analogous to that disclosed in Example I, two glass columns of 2 m in length and 23 cm in diameter were installed. These columns likewise were closed up at the top and the bottom with perforated screens having apertures of 1 mm in diameter. In order to achieve better distribution over the columns of the powder to be introduced, the columns were filled with stainless steel Pall® rings of 15 mm in diameter before being filled over a length of 190 cm with porous powder completely filled up with soybean/castor oil. In order to prevent clogging up of the perforated screens, the powder was bounded on either side by a 5-10 cm thick layer of identical material in the form of unfilled granules having a diameter of 3-4 mm.
The specification of the powder was as follows:

| | |
|---|---|
| particle diameter | 350-1000 µm |
| porosity | 3 ml/g |
| average pore diameter | 10 µm |
| degree of substitution with oil | 72 wt.% |

The amounts of powder differed per column: column 1 held 24,4 kg and column 2 29,4 kg,
The columns were loaded alternately, with the water to be treated being pumped from the bottom upwards and regeneration with 105°C atmospheric steam taking place from the top downwards. The rate of flow of the steam was 4 kg per hour.
After 32 loadings and regenerations the efficiency of the columns proved unchanged.
The rate of flow of the liquid was 150 l per hour at a temperature of 6° to 13°C. The water to be treated had the following influent concentrations:

| | |
|---|---|
| dichloromethane | 195 ppm |
| chloroform | 39 ppm |
| dichloroethane | 32 ppm |
| benzene | 272 ppm |
| toluene | 137 ppm |

The effluent concentrations were measured by means of gas chromatography using an electron capture detector (for chlorinated hydrocarbons) and flame ionisation (for benzene and toluene), respectively, and found to be below the detection limits for chloroform, dichloroethane, benzene, and toluene of 10 ppb (for chloroform and dichloroethane) and 1 ppb (for benzene and toluene), respectively. The value measured for dichloromethane each time was < 0,6 ppm.

### Example IV

In a manner analogous to that disclosed in Example III, two columns were filled with Pall® rings, which this time had a diameter of 25 mm and were made of polypropylene. The columns were filled over a length of 180-190 cm, column 1 being filled with 28,3 kg of powder and column 2 with 23,8 kg. In order to prevent clogging up of the perforated screens, the powder was bounded on either side by a 5-10 cm thick layer of unfilled polypropylene granules having a diameter of 3-4 mm. The regeneration was carried out at a rate of flow of the steam of 2 kg per hour. After 11 loadings and regenerations the efficiency of the columns proved unchanged.
The rate of flow of the liquid was 150 l per hour at a temperature of 15° to 20°C. The water to be treated had the following influent concentrations:

| | |
|---|---|
| 1,1-dichloroethane | 2-3 ppm |
| cis-1,2-dichloroethene | 30-50 ppm |
| 1,1,1-trichloroethane | 1-8 ppm |
| trichloroethene | 0,1-0,3 ppm |

Again, the effluent concentrations were measured by means of gas chromatography using ECD and found to be below the detection limits for said solvents, which were as follows:

| | |
|---|---|
| 1,1-dichloroethane | < 50 ppb |
| cis-1,2-dichloroethene | < 150 ppb |
| 1,1,1-trichloroethane | < 1 ppb |
| trichloroethene | < 1 ppb |

After condensation of the steam the organic substances were drawn off from a liquid separator as lower layer.

## Claims

1. Use of a porous, preferably dimensionally stable, polymer for the extraction of hydrophobic constituents, such as benzene, toluene, xylene and/or chlorinated hydrocarbons, from an aqueous solution, wherein the polymer contains a hydrophobic liquid exhibiting great affinity for the constituents to be extracted from the water and has a surface which will be wetted more readily by the hydrophobic liquid immobilised in pores having an average diameter of 0,1 µm or more than by the aqueous solution, characterised in that use is made of a regenerative granulate or powder of a porous polymer having an average particle diameter in the range of 0,1 to 10 mm and pores in the range of 0,1 to 50 µm, which is obtained by the dissolving of a polymer, with heating, at a temperature above the upper critical decomposition temperature Tc in the hydrophobic liquid, followed by lowering of the temperature, resulting in a porous polymer filled with the hydrophobic liquid, and the mechanical diminution of the solidified mass.

2. Use according to claim 1, characterised in that the average pore diameter is in the range of 0,2 to 15 µm.

3. Use according to claim 1, characterised in that the hydrophobic liquid is a glycerol ester of one or more, preferably unsaturated, fatty acids.

4. Use according to claim 3, characterised in that the glycerol ester is soybean oil and/or castor oil.

5. Use according to claim 1, characterised in that the porous polymer is a polyolefin.

6. Use according to claim 1, characterised in that the porous polymer is polypropylene.

## Patentansprüche

1. Verwendung eines porösen, vorzugsweise dimensionsstabilen Polymeren zur Extraktion von hydrophoben Komponenten, wie Benzol, Toluol, Xylol und/oder chlorierte Kohlenwasserstoffe, aus einer wässrigen Lösung, wobei das Polymer eine hydrophobe Flüssigkeit enthält, die eine hohe Affinität für die aus dem Wasser zu extrahierenden Komponenten hat und eine Oberfläche besitzt, die durch die hydrophobe Flüssigkeit, die in Poren mit einem mittleren Durchmesser von 0,1 µm oder mehr immobilisiert ist, leichter benetzt wird als durch die wässrige Lösung, dadurch gekennzeichnet, dass ein regeneratives Granulat oder Pulver aus einem porösen Polymeren verwendet wird, das einen mittleren Teilchendurchmesser im Bereich von 0,1 bis 10 µm und Poren im Bereich von 0,1 bis 50 µm besitzt, das erhalten wird durch Auflösen eines Polymeren unter Erwärmung auf eine Temperatur über der kritischen Zersetzungstemperatur Tc in der hydrophoben Flüssigkeit, gefolgt von der Verminderung der Temperatur, was zu einem porösen Polymer führt, das mit der hydrophoben Flüssigkeit gefüllt ist, und mechanischer Zerkleinerung der verfestigten Masse.

2. Verwendung nach Anspruch 1, dadurch gekennzeichnet, dass der mittlere Porendurchmesser im Bereich von 0,2 bis 15 µm liegt.

3. Verwendung nach Anspruch 1, dadurch gekennzeichnet, dass die hydrophobe Flüssigkeit ein Glycerinester von ein oder mehreren, vorzugsweise ungesättigten Fettsäuren ist.

4. Verwendung nach Anspruch 3, dadurch gekennzeichnet, dass der Glycerinester Sojabohnenöl und/oder Rizinusöl ist.

5. Verwendung nach Anspruch 1, dadurch gekennzeichnet, dass das poröse Polymer ein Polyolefin ist.

6. Verwendung nach Anspruch 1, dadurch gekennzeichnet, dass das poröse Polymer Polypropylen ist.

## Revendications

1. Utilisation d'un polymère poreux, de préférence dimensionnellement stable, pour l'extraction de constituants hydrophobes, tels que benzène, toluène, xylène et/ou hydrocarbures chlorés, d'une solution aqueuse, dans laquelle le polymère contient un liquide hydrophobe présentant une grande affinité pour les constituants à extraire de l'eau et présentant une surface qui peut être mouillée plus facilement par le liquide hydrophobe, immobilisé dans les pores présentant un diamètre moyen de 0,1 µm ou davantage, que par la solution aqueuse, caractérisée en ce que l'on utilise un granulé ou une poudre régénérable d'un polymère poreux présentant un diamètre particulaire moyen de l'ordre de 0,1 à 10 mm et des pores de l'ordre de 0,1 à 50 µm, qui est obtenu(e) par la dissolution du polymère, en chauffant, à une température supérieure à la température de décomposition critique supérieure Tc dans le liquide hydrophobe, suivie par un abaissement de la température, conduisant à un polymère poreux chargé de liquide hydrophobe, et le broyage mécanique de la masse solidifiée.

2. Utilisation selon la revendication 1, caractérisée en ce que le diamètre moyen de pore est compris entre 0,2 et 15 µm.

3. Utilisation selon la revendication 1, caractérisée en ce que le liquide hydrophobe est un ester de glycérol d'un ou plusieurs acides gras, de préférence insaturés.

4. Utilisation selon la revendication 3, caractérisée en ce que l'ester de glycérol est un ester d'huile de soja et/ou d'huile de ricin.

5. Utilisation selon la revendication 1, caractérisée en ce que le polymère poreux est une polyoléfine.

6. Utilisation selon la revendication 1, caractérisée en ce que le polymère poreux est du polypropylène.
